# EUROPEAN PATENT SPECIFICATION

(11) **EP 1 843 250 B1**
(45) Date of publication and mention of the grant of the patent: **10.06.2015**
(21) Application number: 06290569.0
(22) Date of filing: 05.04.2006
(51) Int. Cl.: G06F 11/28, G06F 21/55, G06F 21/56

(54) **System and method for checking the integrity of computer program code**
System und Verfahren zur Überprüfung der Integrität von Computerprogrammcodes
Système et procédé de contrôle de l'intégrité du code d'un programme informatique

(43) Date of publication of application: 10.10.2007
(73) Proprietor: TEXAS INSTRUMENTS FRANCE, 06271 Villeneuve Loubet Cédex (FR); Texas Instruments Incorporated, Dallas, TX 75251-1900 (US)
(72) Inventor: Conti, Gregory Texas Instruments France, Saint Paul 06570 (FR)
(74) Representative: Holt, Michael

(56) References cited:
- EP-A- 0 606 802
- EP-A- 1 612 638
- EP-A- 1 619 572
- FR-A- 2 841 015
- US-A- 5 974 529

## Description

### BACKGROUND OF THE INVENTION

Mobile electronic devices such as personal digital assistants (PDAs) and digital cellular telephones are increasingly used for electronic commerce (e-commerce) and mobile commerce (m-commerce). Programs that execute on the mobile devices to implement e-commerce and/or m-commerce functionality may need to operate in a secure mode to reduce the likelihood of attacks by malicious programs (e.g., virus programs) and to protect sensitive data.

For security reasons, at least some processors provide two levels of operating privilege: a first level of privilege for user programs (i.e., public mode); and a higher level of privilege for use by the operating system. However, the higher level of privilege may or may not provide adequate security for m-commerce and e-commerce, given that this higher level relies on proper operation of operating systems with highly publicized vulnerabilities. In order to address security concerns, some mobile equipment manufacturers implement yet another third level of privilege, or secure mode, that places less reliance on corruptible operating system programs, and more reliance on hardware-based monitoring and control of the secure mode. An example of one such system may be found in U.S. Patent Publication No. 2003/0140245, entitled "Secure Mode for Processors Supporting MMU and Interrupts."

In addition to this secure mode, various hardware-implemented security firewalls and other security monitoring components have been added to the processing systems used in mobile electronic devices to further reduce the vulnerability to attacks. Examples of these security improvements may be found in U.S. Patent Publication No. 2006/0015947, entitled "System and Method for Secure Mode for Processors and Memories on Multiple Semiconductor Dies Within a Single Semiconductor Package"; U.S. Patent Publication No. 2006/0004964, entitled "Method and System of Ensuring Integrity of a Secure Mode Entry Sequence"; U.S. Patent Publication No. 2006/0021035, entitled "System and Method of Identifying and Preventing Security Violations Within a Computing System"; European Patent Publication No. EP 1612638, entitled "Method and System of Verifying Proper Execution of a Secure Mode Entry Sequence"; and European Patent Application EP 04292405.0, entitled "Method and System for Detecting a Security Violation Using an Error Correction Code," to all of which the reader is referred for more information. A further example of security monitoring components being French patent application no. 2841015, which describes a program execution control method, for use in ensuring security programs execute in their intended sequence.

Despite the above-mentioned security enhancements, vulnerabilities still remain. Further improvements for protecting executing software from attacks by malicious programs are desirable.

### SUMMARY OF THE INVENTION

Accordingly, there are disclosed herein systems and methods for checking the integrity of executing computer code. Embodiments provide for the detection of modifications to program code and/or execution behavior that differs from what is expected.

These objects are solved in advantageous manner basically by applying the features laid down in independent claims 1 and 6. Further enhancements are provided by the subclaims.

### BRIEF DESCRIPTION OF THE DRAWINGS

Example embodiments are described with reference to accompanying drawings, wherein:
FIGS. 1 and 2 show systems in accordance with one or more embodiments;
FIGS. 3, 4A, and 4B illustrate software integrity checker subsystems in accordance with one or more embodiments;
FIGS. 5 and 6 show flow diagrams of the operation of software integrity checker subsystems in accordance with one or more embodiments; and
FIG. 7 illustrates integrity checking storage formats in accordance with one or more embodiments.

### NOTATION AND NOMENCLATURE

Certain terms are used throughout the following description and claims to refer to particular system components. As one skilled in the art will appreciate, companies may refer to a component by different names. This document does not intend to distinguish between components that differ in name but not function. In the following discussion and in the claims, the terms "including" and "comprising" are used in an open-ended fashion, and thus should be interpreted to mean "including, but not limited to...." Also, the term "couple" or "couples" is intended to mean either an indirect or direct electrical connection. Thus, if a first device couples to a second device, that connection may be through a direct electrical connection, or through an indirect electrical connection via other devices and connections. Additionally, the term "system" refers to a collection of two or more parts and may be used to refer to a computer system or a portion of a computer system. Further, the term "software" includes any executable code capable of running on a processor, regardless of the media used to store the software. Thus, code stored in non-volatile memory, and sometimes referred to as "embedded firmware," is included within the definition of software.

### DETAILED DESCRIPTION OF THE INVENTION

The following discussion is directed to various embodiments of the invention. Although one or more of these embodiments may be preferred, the embodiments disclosed should not be interpreted, or otherwise used, as limiting the scope of the claimed invention. In addition, one skilled in the art will understand that the following description has broad application, and the discussion of any embodiment is meant only to be illustrative of that embodiment, and not intended to intimate that the scope of the claimed invention, is limited to that embodiment. For example, although embodiments described herein discuss integrity checking of software executing in secure mode, one of ordinary skill in the art will recognize that embodiments of these systems and methods may be implemented for integrity checking of software executing in public mode.

Inasmuch as the systems and methods described herein were developed in the context of a mobile system, the description herein is based on a mobile computing environment. However, the discussion of the various systems and methods in relation to a mobile computing environment should not be construed as a limitation as to the applicability of the systems and methods described herein to only mobile computing environments. One of ordinary skill in the art will appreciate that embodiments of these systems and methods may also be implemented in other computing environments such as desktop computers, laptop computers, network servers, and mainframe computers.

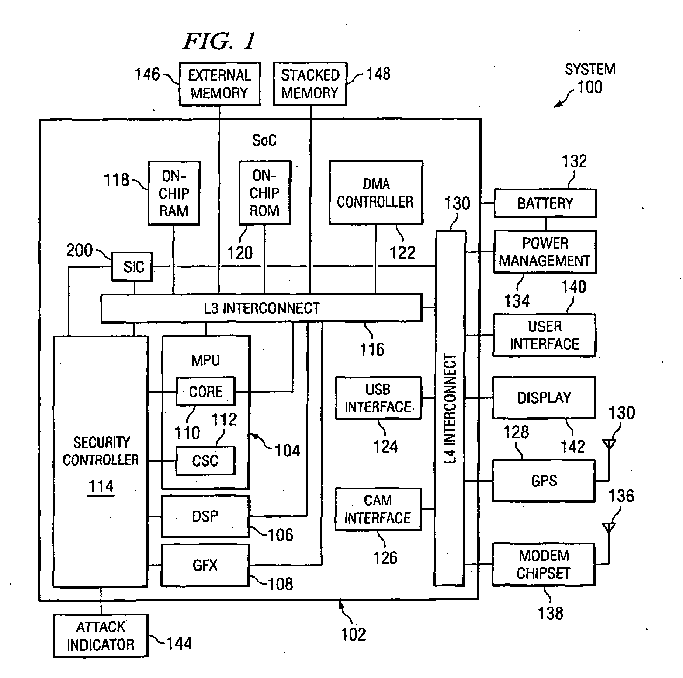

FIG. 1 shows a system 100 constructed in accordance with one or more embodiments of the invention. In accordance with at least some embodiments, the system 100 may be a mobile device such as a cellular telephone, personal digital assistant (PDA), text messaging system, and/or a device that combines the functionality of a messaging system, personal digital assistant and a cellular telephone.

The system 100 includes a multiprocessing unit (MPU) 104 coupled to various other system components by way of data and instruction busses and security firewalls (e.g., L3 interconnect 116, and L4 interconnect 130). The MPU 104 includes a processor core (core) 110 that executes programs. In some embodiments, the core 110 has a pipelined architecture. The MPU 104 further includes a core security controller (CSC) 112, which aids the MPU 104 in entering a secure mode for execution of secure programs on the core 110. The core security controller 112 may also monitor operation during secure mode to ensure secure operation, and during non-secure mode to prevent access to secure components of the system 100.

The core 110 may be any processor suitable for integration into a system on a chip (SoC), such as the ARM 1136 series of processors. In other embodiments, the core 110 may be a processor that includes some or all of the functionality of the core security controller 112 as described herein, such as the ARM 1176 series of processors. The ARM 1136 and 1176 technology may be obtained from ARM Holdings plc of Cambridge, United Kingdom, and/or ARM, Inc. of Austin, Texas, USA.

The system 100 also includes a digital signal processor (DSP) 106 coupled to the MPU 104 by way of the L3 interconnect 116. The DSP 106 aids the MPU 104 by performing task-specific computations, such as graphics manipulation and speech processing. The DSP 106 may have its own core and its own core security controller (not specifically shown). A graphics accelerator (GFX) 108 may also couple both to the MPU 104 and the DSP 106 by way of the L3 interconnect 116. The graphics accelerator 108 performs necessary computations and translations of information to allow display of information, such as on display device 142. The graphics accelerator 108, like the MPU 104 and the DSP 106, may have its own core and its own core security controller (not specifically shown). As with the MPU 104, both the DSP 106 and the graphics accelerator 108 may each independently enter a secure mode to execute secure programs on their respective cores.

The system 100 also includes a direct memory access controller ("DMA") 122 coupled to on-chip RAM 118, on-chip ROM 120, external memory 146, and stacked memory 148 by way of the L3 interconnect 116. The DMA controller 122 controls access to and from the on-chip memory and the external memory by any of the other system components such as, for example, the MPU 104, the DSP 106 and the graphics accelerator 108. The memory components may be any suitable memory, such as synchronous RAM, RAMBUS™-type RAM, programmable ROMs (PROMs), erasable programmable ROMs (EPROMs), and electrically erasable programmable ROMs (EEPROMs). The stacked memory 148 may be any suitable memory that is integrated within the same semiconductor package as system-on-a-chip (SoC) 102, but on a semiconductor die separate from the semiconductor die of the system-on-a-chip 102.

The system 100 also includes various interfaces and components coupled to the various subsystems of the SoC 102 by way of the L4 interconnect 130. The interfaces include a USB interface (USB I/F) 124 that allows the system 100 to couple to and communicate with external devices, a camera interface (CAM I/F) 126 which enables camera functionality for capturing digital images, and a user interface (User I/F) 140, such as a keyboard, keypad, or touch panel, through which a user may input data and/or messages. The components include a modem chipset 138 coupled to an external antenna 136, a global positioning system (GPS) circuit 128 likewise coupled to an external antenna 130, and a power management unit 134 controlling a battery 132 that provides power to the various components of the system 100.

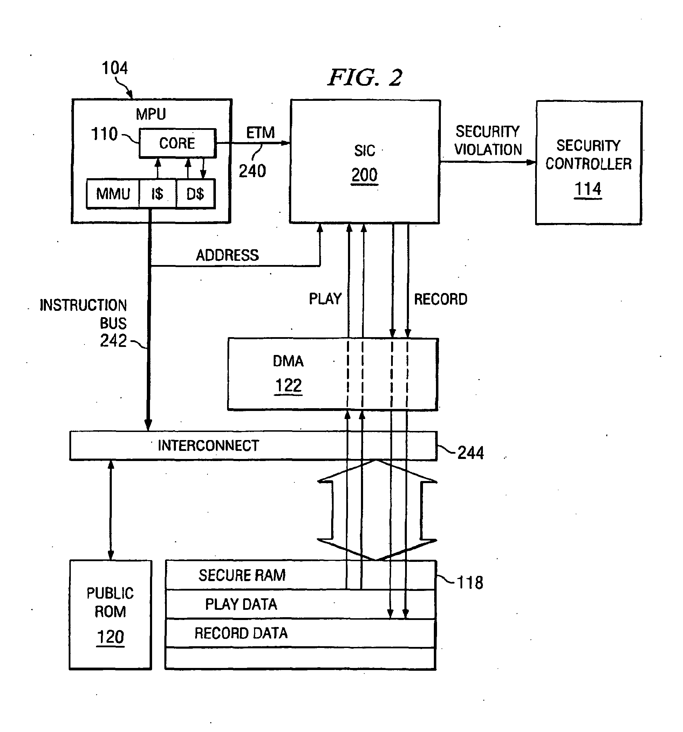

The system 100 also includes software integrity checking ("SIC") logic 200 coupled to the MPU 104 and the DMA controller 122 by way of the L3 interconnect 116. The SIC logic 200, embodiments of which are described more detail in relation to FIGS. 2, 3, 4A, and 4B below, may be programmed to check the integrity of computer program code executing on the MPU 104. In some embodiments, the SIC logic 200 operates in two modes, record mode and play mode. In record mode, the SIC logic 200 computes and stores model address fetch signatures and execution state signatures for groups of instructions in an executing code sequence. In play mode, the SIC logic 200 checks the integrity of the code sequence as it executes, computing address fetch signatures and execution state signatures for groups of instructions in the code sequence as the code is executing and comparing these signatures to the corresponding pre-computed model address fetch and execution state signatures. If a discrepancy between signatures is detected, the SIC logic 200 signals a security violation. In either record or play mode, the SIC logic 200 begins operation when it detects the starting address of the code sequence it has been programmed to recognize and stops operating when it detects the end address of the code sequence.

Many of the components illustrated in FIG. 1, while also available as individual integrated circuits, may be integrated or constructed onto a single semiconductor die. Thus, the MPU 104, digital signal processor 106, memory controller 122, along with some or all of the remaining components, may be integrated onto a single die, and thus may be integrated into the system 100 as a single packaged component. Having multiple devices integrated onto a single die, especially devices comprising an MPU 104 and on-chip memory (e.g., on-chip RAM 118 and on-chip ROM 120), is generally referred to as a system-on-a-chip (SoC) 102 or a megacell. While using a system-on-a-chip may be preferred, obtaining the benefits of the systems and methods as described herein does not require the use of a system-on-a-chip.

Each of the core security controllers (e.g., core security controller 112) is implemented as a hardware-based state machine that monitors system parameters of each of the respective processor cores (e.g., core 110). A core security controller allows the secure mode of operation to initiate such that a processor may execute secure programs from secure memory (e.g., from a secure address range of the on-chip memory) and access secure resources (e.g., control registers for secure channels of the direct memory access controller 122). For more detailed description of embodiments of a core security controller, including the secure mode of operation, the signals that may be monitored to make the decision as to whether to enter the secure mode, and a state diagram for operation, reference may be had to United States Patent Application Publication No. 2003/0140245A1, published July 24, 2003, which is assigned to the same Assignee as the present specification.

The L3 interconnect 116 and the L4 interconnect 130 of the system 100 each include busses linking the various components of the system 100 and security firewalls (not specifically shown) that provide additional protection beyond the protection provided by the core security controllers. The security firewalls provide isolation between components of the system 100 that are capable of operating at different security levels. The security firewalls are integrated into the busses linking the various components of the system 100 to provide control over request/response mechanisms within the busses. Such request/response mechanisms allow components requesting access (i.e., initiators) to access other components, (i.e., targets) only if access is allowed by a security firewall integrated into the bus coupling the components. Thus, for example, the direct memory access controller 122 may request access to the stacked memory 148, but will only be granted access by a memory security firewall integrated into the L3 interconnect 116 if access does not violate a security constraint (i.e., has the appropriate access attributes as defined in the memory security firewall). Or, if an attempt is made by a USB device coupled to the USB port 124 to access a secure address range of the on-chip RAM 118, the security firewall integrated into the L4 interconnect 130 may deny access.

The SIC 200, security firewalls, the core security controllers (e.g., core security controller 112), and the attack indicator 144 each couple to the security controller 114. The security controller 114 acts as a hub for the detection of security violations, receiving security violation signals from the core security controllers and the firewalls. If the security controller 114 receives a security violation signal, it may respond by alerting the user that a violation has been detected, such as by activating the attack indicator 144, by causing one or more core security controllers (e.g., core security controller 112) to initiate one or more security response sequences (described below), such as blocking the current access from reaching the target memory or target component, and/or by logging the source of the security violation. The attack indicator 144 may be a visible or audible (or both) indicator such as an LED or a buzzer.

The response of the security controller 114 is determined based on pre-selected options set when the system 100 is booted and/or on the source of the security violation signal (e.g., a firewall). For example, if a firewall has already blocked an attempted illegal access, the security controller 114 may simply log the fact that the security violation occurred as no further action is needed. Exemplary embodiments of computer systems including a security controller, firewalls, and core security controllers are provided in US Patent Publication No. 2006/0021035, entitled "System and Method of Identifying and Preventing Security Violations within a Computing System," to which the reader is referred.

The core security controller 112 may initiate one or more security response sequences when notified by the security controller 114 that a security violation has occurred. The available security response sequences include blocking or stopping execution of the violating operation, blocking future execution of the offending program (e.g., by deleting the program from the system 100), resetting the core 110, or notifying the core 110 to enter debug mode.

To block or stop execution of the violating operation, the core security controller 112 may abort an instruction presented to the core 110 by asserting a native processor hardware-based abort (e.g., a pre-fetch abort). The hardware-based abort prevents the offending instruction from executing and also may flush prefetch units, internal instruction and/or data prediction mechanisms, and pipeline stages of the core 110 that may contain additional program instructions that are part of a violation or attack. Such a flush causes the context of a malicious program to be cleared, which terminates execution of the program. Because the abort is hardware-based and not vulnerable to control or interference by software, a malicious program may have great difficulty intercepting or bypassing a security response sequence thus implemented.

To block future execution of the offending program, the core security controller 112 may generate an interrupt to the core 110 to trigger an interrupt service routine that launches one or more software programs (e.g., anti-virus software) that can identify the source of the malicious program and prevent future execution of the program (e.g. by deleting the source from the system 100). In some embodiments of the invention, a high-performance, high-priority processor interrupt may be used (e.g., the FIQ interrupt of the ARM 1136 or 1176 series processor) to trigger an interrupt service routine. This interrupt may also be implemented in the system such that the system will automatically enter secure mode before entering the interrupt service routine, thus guaranteeing that the interrupt service routine is protected from a software attack initiated in public mode (e.g., the secure FIQ of the ARM 1176 series processor).

To reset the core 110, the core security controller 112 causes a processor or warm reset signal to be sent to the core 110. To notify the core 110 to enter debug mode, the core security controller 112 causes a signal to be sent to the core 110 that causes the core 110 operate in a debug state.

FIGS. 2, 3, 4A, and 4B illustrate the functionality of embodiments of the SIC logic 200 in more detail. As is illustrated in FIG. 2, the SIC logic 200 is coupled to the instruction bus 242 and to the interface bus of the embedded trace macro cell ("ETM") trace port 240 of the MPU 104. The instruction bus 242 is used by the core 110 to fetch instructions for execution from memory, e.g., secure RAM 118. The interconnect 244 and the instruction bus 242 are included in the L3 interconnect 116 of FIG. 1.

As is known to one of ordinary skill in the art, an ETM port on a processor allows programmers to debug programs by monitoring the status of an executed instruction. In particular, an ETM port comprises an address bus that provides the address of the last executed instruction, as well as an interface bus that provides information as to the state of the processor during the last executed instruction. In some embodiments, the ETM port signals ETMIA[31:0] correspond to the last executed instruction address from the address bus, and the signals ETMIACTL[31:0] correspond to the state signals from the interface bus. As is further described below, the SIC 200 uses these state signals and the addresses on the instruction bus 212 to check the integrity of executing software.

The address bus of the ETM port provides a virtual address of the last executed instruction. In the embodiments described herein, these virtual addresses are not used for checking the integrity of executing software. However, one of ordinary skill in the art will appreciate that embodiments may be implemented that include the virtual addresses in the integrity checking process for software code segments that can be guaranteed to loaded into the same virtual address locations each time they are executed. Such embodiments are included within the scope of the claimed invention.

The SIC 200 has two operating modes, play and record. The SIC logic 200 uses instruction addresses received from the instruction bus 242 and state signals received from the ETM port 240 to compute address fetch and execution state signatures, respectively, in both operating modes. The SIC logic 200 also uses secure channels of DMA 122 to store model address fetch and execution state signatures in secure memory (e.g., secure RAM 118) when in record mode, and to read the model signatures from secure RAM 118 when in play mode.

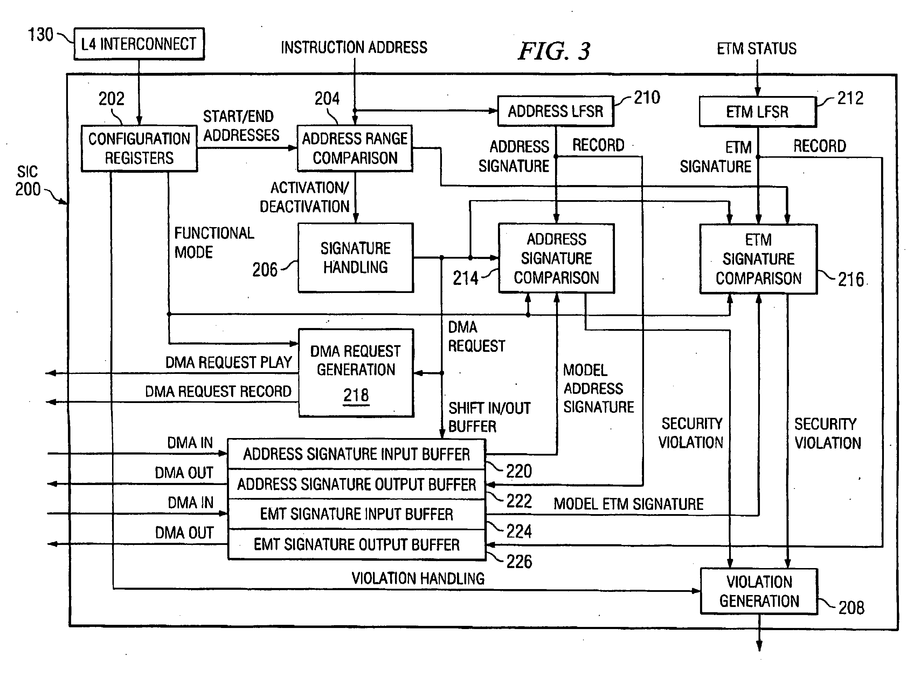

As is shown in FIG. 3, at least one embodiment of the SIC logic 200 includes configuration registers 202, address range comparison logic 204, violation generation logic 208, and integrity checking logic that includes signature handling logic 206, an address linear feedback shift register ("LFSR") 210, an ETM LFSR 212, address signature comparison logic 214, ETM comparison logic 216, DMA request generation logic 218, and various address fetch signature and execution state signature input/output buffers 220-226.

The configuration registers 202, which may be set and/or changed through an interface to the L4 bus/firewall 130, include a SIC mode indicator, the start and end addresses of an address range in secure RAM 118 over which the SIC logic 200 will operate, and security violation handling configuration bits. The mode indicator specifies the functional mode (i.e., play mode or record mode) of the SIC logic 200. The setting of the security violation handling configuration bits determines what security violation responses the violation generation logic 208 will require from the security controller 114 if a security violation is detected in play mode. The requested security violation responses may be one or more of those responses previously described in reference to the security controller 114 (e.g., blocking or stopping execution of the current instruction, resetting the core 110, and/or notifying the core 110 to enter debug mode)

The address range comparison logic 204 receives physical instruction addresses from the instruction bus 242. When the address range comparison logic 204 detects an address that corresponds to the start address specified in the configuration registers 202, it sends an activation signal to the signature handling logic 206. When the address range comparison logic 204 detects an address that corresponds to the end address specified in the configuration registers 202, it sends a deactivation signal to the signature handling logic 206.

The address LFSR 210 also receives physical instruction addresses from the instruction bus 242. The ETM LFSR 212 receives execution state signals from the ETM 240 after each instruction fetched from these physical locations is executed. In some embodiments, the address LFSR 210 and the ETM LFSR 212 are LFSRs in a Galois configuration. The address LFSR 210 and the ETM LFSR 212 each generate signatures representative of the physical instruction address sequence (i.e., address fetch signatures) and the execution states resulting from the execution of the instructions in the sequence (i.e., execution state signatures), respectively, for the currently executing software. At each clock cycle, the outputs of the LFSRs 210, 212 are written to shadow buffers (not specifically shown). When the SIC logic 200 is in record mode, the contents of the shadow buffer of the address LFSR 210 and the ETM LFSR 212 are respectively provided to the address signature output buffer 222 and the ETM signature output buffer 226. When the SIC logic 200 is in play mode, the contents of the shadow buffer of the address LFSR 210 and the ETM LFSR 212 are respectively provided to the address signature comparison logic 214 and the ETM signature comparison logic 216.

The signature handling logic 206 receives activation and deactivation signals from the address range comparison logic 204. When activated, the signature handling logic 206 counts the instruction addresses received. When a predetermined number of instruction addresses have been received, the signature handling logic 206 sends a signature checking request to the address signature comparison logic 214 and the ETM signature comparison logic 216. If the SIC logic 200 is in record mode, when the signature checking request is received by the address signature comparison logic 214 and the ETM signature comparison logic 216, the contents of the address signature and ETM signature shadow buffers are shifted into the address signature output buffer 222 and the ETM signature output buffer 226, respectively. The signature handling logic 206 also signals the DMA request generation logic 218 to generate a request to the DMA controller 122 to write the contents of the address signature output buffer 222 and the ETM signature output buffer 226 to memory.

If the SIC logic 200 is in play mode, the signature handling logic 206 signals the DMA request generation logic 218 to generate a request to the DMA controller 122 to fetch the pre-computed model address fetch signature and execution state signature that correspond to the counted instruction addresses. The pre-computed model signatures are placed in the address signature input buffer 220 and the ETM signature input buffer 224. The signature handling logic 206 then signals the address signature comparison logic 214 and the ETM signal comparison logic 216 to compare the signatures generated by the address LFSR 210 and the ETM LFSR 212 to the model signatures in the signature input buffers 220, 224.

The address signature comparison logic 214 and the ETM signature comparison logic 216 compare signatures generated by the address LFSR 210 and the ETM LFSR 212, respectively, to pre-computed model signatures in the signature input buffers 220, 224. If the address signature comparison logic 214 determines that the address fetch signature generated by the address LFSR 210 does not match the model address fetch signature, it send a security violation notification to the violation generation logic 208. Similarly, if the ETM signature comparison logic 216 determines that the execution state signature generated by the ETM LFSR 212 does not match the model execution state signature, it sends a security violation notification to the violation generation logic 208.

The DMA request generation logic 218 is coupled to the DMA controller 122 to request DMA transfers to and from memory (e.g., secure RAM 118). If the SIC logic 200 is in record mode, the DMA request generation logic 218 initiates DMA transfers (i.e., writes) of the contents of the address signature output buffer 222 and the ETM signature output buffer 226 to memory. Similarly, if the SIC logic 200 is in play mode, the DMA request generation logic 218 initiates DMA transfers (i.e., reads) of pre-computed signatures stored in memory into the address signature input buffer 220 and the ETM signature input buffer 224.

The violation generation logic 208 receives the security violation indications from the address signature comparison logic 214 and the ETM signature comparison logic 216 and determines what actions are to be taken in response to the security violation. This determination is made based on setting of the security violation handling configuration bits in the configuration registers 202. The violation generator logic 208 sends a notification to the security controller 114 that indicates a security violation has been detected by the SIC 200 and the response actions the security controller 114 should initiate in response to this SIC security violation.

The embodiment of FIG. 2 records or verifies signatures at periodic checkpoints (i.e., after every n instructions executed, where n is a pre-determined number). For complex code sequences with data dependent alternative execution paths (e.g., conditional branches), each path must be accounted for in recording the model signatures. The number of checkpoints with their attendant signature pairs to be recorded or verified for each n instructions increases as the number of execution paths increases.

However, in such code sequences, the alternative execution paths may have convergence points. That is, no matter which alternative execution path is taken at a given point in the code sequence, eventually a common instruction address, i.e., a convergence point, is reached in each of the alternative paths. Signatures may be recorded or verified at these convergence points, thus reducing the number of signatures required to verify complex code sequences. For example, if the maximum number of alternative execution paths at any point in a code sequence is three, the maximum number of signature pairs required at any convergence point is three.

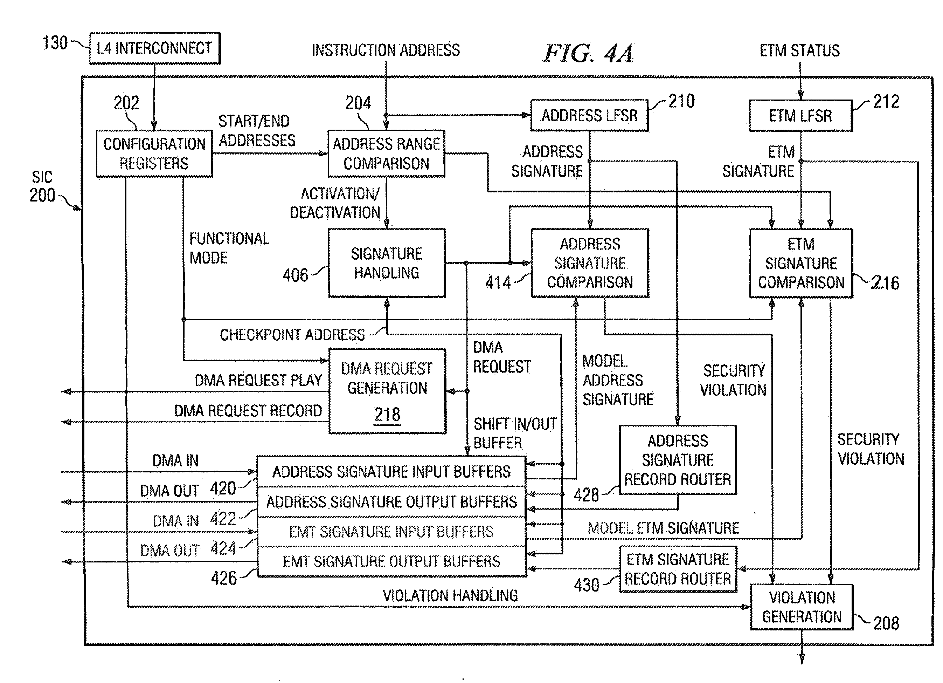

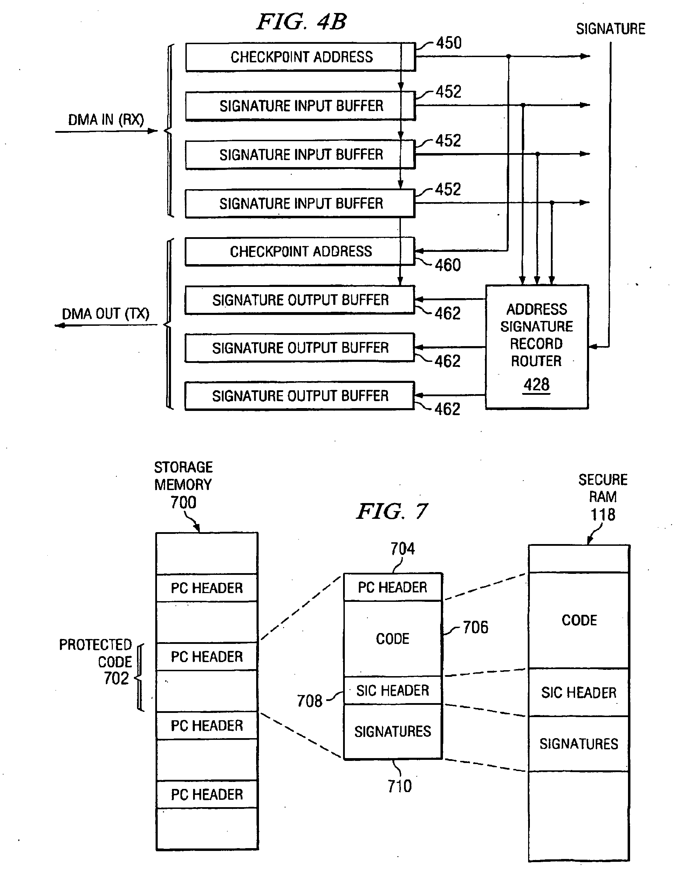

FIGS. 4A and 4B illustrate an embodiment of the SIC logic 200 that records or verifies signatures at specified instruction addresses in a code sequence rather than counting instructions. In such embodiments, a code sequence to be protected is analyzed to determine the alternative data paths and convergence points. The addresses of these convergence points are stored in memory as entries in checkpoint records and are used by the SIC logic 200 as checkpoints at which the SIC logic 200 records or verifies signatures. Other addresses for checkpoints may be specified as well.

In some embodiments, a checkpoint record includes a checkpoint address and some number of entries for holding address fetch signatures and ETM signatures corresponding to that checkpoint address. As is explained in more detail below, the number of signature entries is determined by the code sequence complexity an embodiment of the SIC logic 200 is designed to handle. With the SIC logic 200 in record mode, the code sequence is executed multiple times with differing data sets to force the execution of all alternative data paths corresponding to the selected checkpoints. Thus, address fetch/ETM signature pairs for each alternative data path converging at a checkpoint may be generated and stored in a checkpoint record.

As is shown in FIG. 4A, at least one embodiment of the SIC logic 200 includes the following components with functionality similar to those described in relation to FIG. 3 above: configuration registers 202, address range comparison logic 204, violation generation logic 208, an address LFSR 210, an ETM LFSR 212, and DMA request generation logic 218. The SIC logic 200 also includes signature handling logic 406, address signature comparison logic 414, ETM comparison logic 416, address signature router logic 428, ETM signature record router logic 430, and various address fetch signature and execution state signature input/output buffers 420-426.

The address fetch signature input buffers 420 and the ETM fetch signature input buffers 424, which are used when the SIC logic 200 is in either record or play mode, each include a checkpoint buffer, and one or more signature buffers. In play mode, the checkpoint buffer holds the address of the next checkpoint and the signature buffers hold the model signatures for that checkpoint. In record mode, the checkpoint buffer also holds the address of the next checkpoint and the signature buffers hold any signatures that have already been generated for that checkpoint. The number of signature buffers is determined by the complexity of the code sequences an embodiment of the SIC logic 200 is designed to handle. For example, the input buffers 420 and 424 will include six signature buffers each (three for address fetch signatures and three for ETM signatures) if the SIC logic 200 is designed to handle code sequences having three alternative execution paths.

The address fetch signature output buffers 422 and the ETM fetch signature output buffers 426, which are used when the SIC logic 200 is in record mode, also each include a checkpoint buffer, and one or more signature buffers. The checkpoint buffers holds the address of the checkpoint for which a model signature is being generated, and the signature buffers hold the generated model signatures for that checkpoint that are to be written to memory. The output buffers 422, 426 include the same number of signature buffers as the input buffers 420, 424.

The address signature record router logic 428 and the ETM signature record router logic 430 are coupled to the address LFSR 210 and the ETM LFSR 212, respectively. The routers 428, 430 are coupled to the LFSRs 210, 212 to receive the generated signatures from the shadow buffers when the SIC logic 200 is in record mode, and to place the generated signatures in one of the signature output buffers 422, 426. The functionality of embodiments of the address signature record router logic 428 is explained by way of example below in reference to FIG. 4B. Embodiments of the ETM signature record router logic 420 include similar functionality.

The signature handling logic 406 receives activation and deactivation signals from the address range comparison logic 204. When activated, the signature handling logic 406 signals the DMA request generation logic 218 to read checkpoint nodes from memory and place the checkpoint address and signature entries of the records in the address signature input buffers 420 and the ETM signature input buffers 424. The signature handling logic also compares the current instruction address to the checkpoint address in the checkpoint address buffer of the address signature input buffers 420. When the current instruction address is the same as the checkpoint address, the signature handling logic 406 performs certain actions based on the functional mode of the SIC logic 200.

If the SIC logic 200 is in record mode, the signature handling logic 406 causes the contents of the address signature and ETM signature shadow buffers to be provided to the address signature record router logic 428 and the ETM signature record router logic 430, respectively. The signature handling logic 406 also signals the DMA request generation logic 218 to write the contents of the address signature output buffers 422 and the ETM signature output buffers 426 to memory. Once the buffer contents are written, the signature handling logic 406 signals the DMA request generation logic 218 to fetch the next checkpoint record from memory and place its contents in the address signature input buffers 420 and the ETM signature input buffers 424.

If the SIC logic 200 is in play mode, the signature handling logic 406 signals the address signature comparison logic 414 and the ETM signal comparison logic 416 to compare the signatures generated by the address LFSR 210 and the ETM LFSR 212 to the model signatures in the signature input buffers 420, 424. The address signature comparison logic 414 and the ETM signature comparison logic 416 compare signatures generated by the address LFSR 210 and the ETM LFSR 212, respectively, to pre-computed model signatures in the signature input buffers 220, 224. If the address signature comparison logic 414 determines that the address fetch signature generated by the address LFSR 210 does not match any of the model address fetch signatures in the address signature input buffers 420, it send a security violation notification to the violation generation logic 208. Similarly, if the ETM signature comparison logic 416 determines that the execution state signature generated by the ETM LFSR 212 does not match any of the model execution state signatures in the ETM signature input buffers 424, it sends a security violation notification to the violation generation logic 208. If both generated signatures match model signatures in the input buffers 420, 424, the signature handling logic 406 signals the DMA request logic 218 to fetch the next checkpoint record.

FIG. 4B is an illustrative flow diagram of the functionality of the address signature record router logic 428 in accordance with some embodiments. The address signature record router logic 428 provides the capability to merge address fetch signatures generated for each alternative data path between convergence points of a code sequence. In the example embodiment of FIG. 4B, the address signature input buffers 420 of FIG. 4A and the address signature output buffers 422 of FIG. 4A each include a checkpoint address buffer 450, 452 and three signature buffers 452, 462. A checkpoint record will thus include a checkpoint address and three signature entries for holding address fetch signatures. The address signature record router logic 428 is coupled to the input buffers 452 and the output buffers 462 to read signature values from the input buffers 452 and to place signature values in the output buffers 462.

As previously mentioned, the signature handling logic 406 causes a checkpoint record to be read from memory and the entries placed in the address signature input buffers 420. In some embodiments, the signature entries of a checkpoint record are set to a default value when the checkpoint record is created. As address fetch signatures are generated for a checkpoint in successive executions of the code, the default values are replaced with the generated signature values as follows. The address signature record router logic 428 receives a generated address fetch signature from the shadow buffer of the address LFSR 210, and compares the generated signature to the signature values, if any, in the input buffers 452. If the generated signature is not in any of the input buffers 452, the contents of any input buffers 452 holding previously generated signatures are copied to corresponding ones of the output buffers 462, and the generated signature is placed in the next available output buffer 462. If the generated signature is in one of the input buffers 452, the input buffers 452 are copied to the output buffers 462. The signature handling logic 406 subsequently causes the contents of the output buffers 462 and the checkpoint address buffer 460 to be written back to memory.

In other embodiments, the record router logic 428, 430 may not be present to merge the multiple generated signatures. Instead, the signatures generated by multiple executions of a code sequence exercising the alternative data paths are merged by a software program that creates checkpoint records corresponding to each checkpoint.

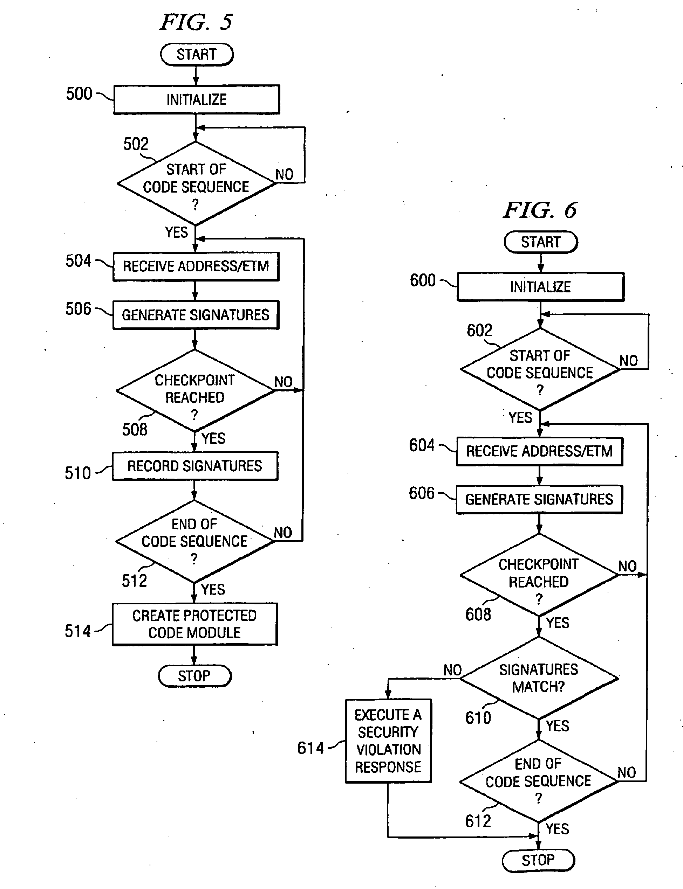

FIGS. 5 and 6 are flow diagrams illustrating the operation of embodiments of the SIC logic 200 in record mode and in play mode, respectively. Although the actions of in these flow diagrams are presented and described serially, one of ordinary skill in the art will appreciate that the order may differ and/or some of the actions may occur in parallel.

As is shown in FIG. 5, to operate some embodiments of the SIC logic 200 in record mode to record signatures for a code sequence, the system 100 (FIG. 1) and the SIC logic 200 are initialized (block 500). The mode indicator in the configuration registers 202 is set to indicate record mode and the start and end address registers are set to the start and end addresses in secure RAM 118 where the code sequence for which signatures are to be generated is to be loaded.

Secure DMA channels are also configured to point to the beginning of the address range in memory where generated signatures are to be stored. In those embodiments of the SIC logic 200 that record signatures at periodic checkpoints (FIG. 3), the designated memory locations will be used to store the generated address fetch and ETM signatures at each checkpoint. In those embodiments of the SIC logic 200 that record signatures at predefined checkpoints (FIGS. 4A and 4B), the designated memory locations are initialized with checkpoint records, each including a predetermined checkpoint address and entries for storing the generated signatures corresponding to that checkpoint address. If the code sequence is to be executed for the first time for purposes of recording signatures, the signature entries are set to a default value indicating that there is no signature stored in the entry. If the code sequence has been executed before and signatures generated, the signature entries will contain any previously generated signatures for the checkpoint.

Software instructions that include the code sequence designated for signature recordation are loaded into the secure RAM 118 such that the code sequence begins and ends at the designated start and end addresses. To complete the initialization process, in some embodiments, the state of the MPU 104 is set to duplicate the execution environment in which the code sequence will execute when in actual use. In some embodiments, the initialization of the MPU 104 may include enabling or disabling the memory mapping unit (MMU), enabling or disabling one or both of the instruction cache (I$) and data cache (D$), and setting the instruction cache replacement policy if the instruction cache is enabled. The initialization may also include activating the ETM interface, flushing the instruction cache if it is enabled, and flushing the prefetch buffer. Once the initialization is complete, execution of the software instructions is started.

The address range comparison logic 204 (FIGS. 3 and 4) monitors the addresses of the executing instructions, checking for the starting address of the code sequence (block 502). When the starting address is received, the address range comparison logic 204 activates the signature handling logic 206, 406. The address LFSR 210 and the ETM LFSR 212 also begin generating signatures for the code sequence. The address LFSR 210 receives an instruction address (block 504) and uses it to generate an address fetch signature (block 506). Similarly, the ETM LFSR 212 receives the execution state after the execution of the instruction (block 504) and uses it to generate an execution state signature (block 506). This process of receiving instruction addresses and execution states and generating signatures (blocks 504, 506) is repeated until the signature handling logic 206, 406 determines that a checkpoint has been reached (block 508).

In those embodiments of the SIC logic 200 that record signatures at periodic checkpoints (FIG. 3), the signature handling logic 206 signals a checkpoint after a predetermined number of instruction addresses are received in the SIC logic 200. In those embodiments of the SIC logic 200 that record signatures at predefined checkpoints (FIGS. 4A and 4B), the signature handling logic 406 causes the values in the first checkpoint record to be read into the address signature input buffers 420 and the ETM signature input buffers 424 when the signature handling logic 406 is activated. The signature handling logic 406 also signals a checkpoint when the received instruction address matches the checkpoint address in the checkpoint buffer of the address signature input buffers 420.

When a checkpoint is reached in the execution of the code sequence (block 508), the generated signatures are recorded (block 510). In those embodiments of the SIC logic 200 that record signatures at periodic checkpoints (FIG. 3), the generated address fetch and ETM signatures in the shadow buffers associated with the address LFSR 210 and the ETM LFSR 212 are shifted into the address signature output buffer 222 and the ETM signature output buffer 226, respectively. The signature handling logic 206 then signals the DMA request generation logic 218 to initiate a DMA write of the contents of the output buffers 222, 226 to the designated memory locations.

In those embodiments of the SIC logic 200 that record signatures at predefined checkpoints (FIGS. 4A and 4B), the generated address fetch and ETM signatures in the shadow buffers associated with the address LFSR 210 and the ETM LFSR 212 are shifted into the address signature record router logic 428 and the ETM signature record router logic 430. The signature record router logic 428, 430 compares the generated signature to the signature values, if any, in the signature input buffers 420, 424. If the generated signature is the same as a previously generated signature for the current checkpoint, the values in the signature input buffers 420, 424 are copied to the corresponding signature output buffers 422, 426. If the generated signatures are not the same as any previously generated signature in the signature input buffers 420, 424, the values in the signature input buffers are copied to the corresponding signature output buffers 422, 426, and the newly generated signatures are shifted into the next available signature output buffer. The signature handling logic 406 then signals the DMA request generation logic 218 to initiate a DMA write of the contents of the signature output buffers 422, 426 into the checkpoint record corresponding to the checkpoint address. The signature handling logic 406 subsequently signals the DMA request generation logic 218 to initiate a DMA read of the contents of the next checkpoint record into the input buffers 420, 424.

If the end of the code sequence has not been detected by the address range comparison logic 204 (block 512), the process continues with the receipt of the next instruction address (block 504). If the end of the code sequence has been detected (block 512), the address range comparison logic 204 deactivates the signature handling logic 206, 406. In those embodiments of the SIC logic 200 that record signatures at periodic checkpoints (FIG. 3), a protected code module including the generated signatures is created (block 514). In those embodiments of the SIC logic 200 that record signatures at predefined checkpoints (FIGS. 4A and 4B), the process of initializing and executing the code sequence to generate signatures (blocks 500-512) may be repeated multiple times with differing data sets in order to record all possible signatures at the predetermined checkpoints. Once all relevant execution paths have been followed and signatures generated, a protected code module is created that includes the checkpoint records (block 514).

In some embodiments, a software program may be executed to copy the generated signatures/checkpoint records from memory and package them with the executable code of the software that includes the code sequence to create a protected code module. As is illustrated in FIG. 7, in some embodiments, a protected code (PC) module 702 includes a PC header 704, the code 706, an SIC header 708, and the pre-computed signatures 710. The PC header 704 may include the address in secure RAM 118 where the code is to loaded and an offset indicating the location of the SIC header 708. The SIC header 708 may include an offset indicating the location of the signatures 710, the beginning and ending address of the code sequence within the protected code module that corresponds to the signatures 710, and configuration information. This configuration information may include the MPU initializations and other initializations required to replicate the execution environment under which the signatures 710 were generated. The signatures 710 include the generated signatures/checkpoint records in the order the corresponding checkpoints will occur when the code sequence is executed. In some embodiments, the PC header 704 and the SIC header 710 may be combined in a single header. Also, the headers 704, 710, or a combined header may be located at other points in the protected code module than those illustrated.

Once the protected code module 702 is created, it may be compressed and encrypted and stored in storage memory 700 (e.g., external memory 146 or stacked memory 148 of FIG. 1). When the protected code module 702 is to be executed, the operating system of system 100 retrieves the module 702 from storage memory and loads it into secure RAM 118. If the module 702 is compressed and/or encrypted, it will be decompressed and/or decrypted as a part of the retrieval and loading process. The operating system accesses the PC header 704 to determine if the SIC logic 200 is to be used during execution of the code 706. If the SIC logic 200 is to be used, the operating system loads the code in the secure RAM 118 at the addresses specified in the PC header 704. The SIC logic 200 is then operated in play mode to verify the integrity of the code sequence as it executes.

As is shown in FIG. 6, to operate some embodiments of the SIC logic 200 in play mode, the system 100 (FIG. 1) and the SIC logic 200 are initialized (block 600). When the code 706 is actually executed, the operating system accesses the SIC header 708 to determine what initializations should be done and performs those initializations. The operating system also configures secure DMA channels with the necessary addresses for reading the signatures 710, copies the start and end addresses of the code sequence from the SIC header 708 to the configuration registers 202, and sets the SIC logic 200 functional mode to play mode. The operating system then allows the code 706 to be executed.

The address range comparison logic 204 (FIGS. 3 and 4) monitors the addresses of the executing instructions, checking for the starting address of the code sequence (block 602). When the starting address is received, the address range comparison logic 204 activates the signature handling logic 206, 406. The address LFSR 210 and the ETM LFSR 212 also begin generating signatures for the code sequence. The address LFSR 210 receives an instruction address (block 604) and uses it to generate an address fetch signature (block 606). Similarly, the ETM LFSR 212 receives the execution state after the execution of the instruction (block 604) and uses it to generate an execution state signature (block 606). This process of receiving instruction addresses and execution states and generating signatures (blocks 604, 606) is repeated until the signature handling logic 206, 406 determines that a checkpoint has been reached (block 608).

In those embodiments of the SIC logic 200 that record signatures at periodic checkpoints (FIG. 3), the signature handling logic 206 signals a checkpoint after a predetermined number of instruction addresses are received in the SIC logic 200. In those embodiments of the SIC logic 200 that record signatures at predefined checkpoints (FIGS. 4A and 4B), the signature handling logic 406 causes the values in the first checkpoint record to be read into the address signature input buffers 420 and the ETM signature input buffers 424 when the signature handling logic 406 is activated. The signature handling logic 406 signals a checkpoint when the received instruction address matches the checkpoint address in the checkpoint buffer of the address signature input buffers 420.

When a checkpoint is reached in the execution of the code sequence (block 608), the generated address fetch and ETM signatures are compared to the pre-computed address fetch and ETM signatures in the signatures 710 that correspond to the checkpoint (block 610). The signature handling logic 206, 406 signals the address signature comparison logic 214, 414 and the ETM signature comparison logic 216, 416 to verify the generated signatures. The generated address fetch and ETM signatures in the shadow buffers associated with the address LFSR 210 and the ETM LFSR 212 are provided to the address signature comparison logic 214, 414 and the ETM signature comparison logic 216, 416, respectively.

In those embodiments of the SIC logic 200 that record signatures at periodic checkpoints (FIG. 3), the signature handling logic 206 also signals the DMA request generation logic 218 to initiate a DMA read. The DMA read transfers the pre-computed address fetch and execution state signatures in the signatures 710 that correspond to the checkpoint into the address signature input buffer 222 and the ETM signature buffer 226. The address signature comparison logic 214 and the ETM signature comparison logic 216 then compare the generated signatures to the pre-computed signatures in the signature input buffers 220, 224. If each generated signature matches the corresponding pre-computed signature (block 610), the verification process continues (block 612). If one or both of the generated signatures does not match (block 610), the corresponding signature comparison logic 214, 216 sends a security violation notification to the violation generation logic 208 (block 614) and the verification process terminates.

In those embodiments of the SIC logic 200 that record signatures at predefined checkpoints (FIGS. 4A and 4B), the address signature comparison logic 414 and the ETM signature comparison logic 416 then compare the generated signatures to pre-computed signatures in the signature input buffers 420, 424. If one or both of the generated signatures does not match a pre-computed signature (block 610), the corresponding signature comparison logic 414, 416 sends a security violation notification to the violation generation logic 208 (block 614) and the verification process terminates. If both generated signatures match a pre-computed signature in the respective signature input buffers 420, 424 (block 610), the signature handling logic 406 signals the DMA request generation logic 218 to initiate a DMA read of the contents of the next checkpoint record into the input buffers 420, 424 and the verification process continues (block 612).

If the end of the code sequence has not been detected by the address range comparison logic 204 (block 612), the process continues with the receipt of the next instruction address (block 604). If the end of the code sequence has been detected (block 612), the address range comparison logic 204 deactivates the signature handling logic 206, 406 and the verification process ends.

The above discussion is meant to be illustrative of the principles and various embodiments of the present invention. Numerous variations and modifications will become apparent to those skilled in the art once the above disclosure is fully appreciated. For example, logic circuitry other than an LFSR may be used to generate the address fetch and execution state signatures without departing from the scope of the claimed invention. In addition, the SIC logic may include memory circuitry accessible by the MPU for storing signatures during both record and play modes rather than having the DMA request generation logic. The SIC logic may also truncate the output of the LFSRs to conserve signature storage space if the truncated signatures contain enough randomness and uniqueness to ensure that signature values will not be duplicated within a code sequence. It is intended that the claims be interpreted to embrace all such variations and modifications.

## Claims

1. A method for execution of a code sequence comprising:
starting the execution of instructions comprising the code sequence; and **characterized in that**
while the instructions are executing;
generating a signature representative of a physical instruction address sequence for a portion of the code sequence being executed;
comparing the signature to a pre-computed signature representative of a physical instruction address sequence for a portion of the code sequence;
generating a signature representative of an execution state resulting from the execution of the instructions in the portion of the code sequence being executed;
comparing the signature representative of an execution state resulting from the execution of the instructions in the portion of the code sequence being executed to a pre-computed signature representative of an execution state resulting from the execution of the instructions in the portion of the code sequence; and
saving, in secure memory, the generated signature representative of a physical instruction address sequence for a portion of the code sequence being executed and the generated signature representative of an execution state resulting from the execution of the instructions in the portion of the code sequence being executed in a record mode as a model signature representative of a physical instruction address sequence for a portion of the code sequence being executed and a model signature representative of an execution state resulting from the execution of the instructions in the portion of the code sequence being executed respectively.

2. The method of claim 1, further comprising executing a response indicating a security violation if both of said comparisons do not result in a match.

3. The method of claim 1 or 2, wherein the generating and comparing steps are performed when a checkpoint is reached.

4. The method of claim 3, wherein a checkpoint occurs at one of: when a predetermined number of instructions are executed, or at a predefined instruction address.

5. A method as claimed in any preceding claim and including the steps of comparing the generated signature representative of a physical instruction address sequence for a portion of the code sequence being executed the signature to said saved model signature representative of a physical instruction address sequence for a portion of the code sequence being executed as said pre-computed signature representative of a physical instruction address sequence for a portion of the code sequence and comparing the signature representative of an execution state resulting from the execution of the instructions in the portion of the code sequence being executed to said saved model signature representative of an execution state resulting from the execution of the instructions in the portion of the code sequence being executed as said a pre-computed signature representative of an execution state resulting from the execution of the instructions in the portion of the code sequence.

6. A system (100) comprising:
a processor (104) having a trace port (240), the trace port providing data regarding an execution state of a most recently executed instruction;
a memory (118)coupled to the processor (104); and **characterized by**
a software integrity checking, SIC, logic (200) coupled to the memory (118) and to the trace port (240);
wherein the SIC logic (200) is operable to:
generate a signature representative of a physical instruction address sequence for a portion of the code sequence being executed;
compare the signature to a pre-computed signature representative of a physical instruction address sequence for a portion of the code sequence;
generate a signature representative of an execution state resulting from the execution of the instructions in the portion of the code sequence being executed;
compare the signature representative of an execution state resulting from the execution of the instructions in the portion of the code sequence being executed to a pre-computed signature representative of an execution state resulting from the execution of the instructions in the portion of the code sequence; and
save in the secure memory (118) the generated signature representative of a physical instruction address sequence for a portion of the code sequence being executed and the generated signature representative of an execution state resulting from the execution of the instructions in the portion of the code sequence being executed in a record mode as a model signature representative of a physical instruction address sequence for a portion of the code sequence being executed and a model signature representative of an execution state resulting from the execution of the instructions in the portion of the code sequence being executed respectively.

7. The system of claim 6, wherein to check integrity of addresses, the SIC logic (200) initiates the generate and compare steps when a checkpoint has been reached.

8. The system of claim 6, wherein to determine that a checkpoint has been reached, the SIC logic (200) is further operable to determine that a checkpoint has been reached at one of: a predefined instruction address, or when a predetermined number of instructions is executed.

9. The system of claim 6, wherein to check integrity of execution states, the SIC logic (200) further comprises logic (208) for executing a response indicating a security violation if both of said comparisons do not result in a match.

10. The system of any preceding claim wherein the SIC logic is further adapted to:
compare the generated signature representative of a physical instruction address sequence for a portion of the code sequence being executed the signature to said saved model signature representative of a physical instruction address sequence for a portion of the code sequence being executed as said pre-computed signature representative of a physical instruction address sequence for a portion of the code sequence; and
compare the signature representative of an execution state resulting from the execution of the instructions in the portion of the code sequence being executed to said saved model signature representative of an execution state resulting from the execution of the instructions in the portion of the code sequence being executed as said a pre-computed signature representative of an execution state resulting from the execution of the instructions in the portion of the code sequence.

## Patentansprüche

1. Verfahren zur Ausführung einer Codesequenz, umfassend:
Starten der Ausführung von Anweisungen, umfassend die Codefolge; und **dadurch gekennzeichnet, dass**
während die Befehle ausführt;
Erzeugen einer Signatur repräsentativ für eine physikalische Befehlsadressen-Sequenz für einen Teil der Codefolge ausgeführt wird;
Vergleichen der Signatur auf eine vorberechnete Signatur repräsentativ für eine physikalische Befehlsadressen-Sequenz für einen Teil der Codefolge;
Erzeugen einer Signatur repräsentativ für einen Ausführungszustand von der Ausführung der Befehle in dem Abschnitt der Codefolge ausgeführt resultieren;
Vergleichen der Signatur repräsentativ für einen Ausführungszustand von der Ausführung der Befehle in dem Abschnitt der Codefolge resultierende an einen vorberechneten Signatur repräsentativ für einen Ausführungszustand von der Ausführung der Befehle in dem Abschnitt der Codefolge resultierende ausgeführt wird; und
Speichern, in einem sicheren Speicher die erzeugte Signatur repräsentativ für eine physikalische Befehlsadressen-Sequenz für einen Teil der Codefolge ausgeführt und die erzeugte Signatur repräsentativ für einen Ausführungszustand von der Ausführung der Befehle in dem Abschnitt der Codefolge resultierende ausgeführten in einem Aufzeichnungsmodus als Modell Signatur repräsentativ für eine physikalische Befehlsadressen-Sequenz für einen Teil der Codefolge ausgeführt und Modell Signatur repräsentativ für einen Ausführungszustand von der Ausführung der Befehle in dem Abschnitt der Codefolge resultierende jeweils ausgeführten.

2. Verfahren nach Anspruch 1, ferner umfassend Ausführen einer Antwort, welche eine Sicherheitsverletzung, wenn sowohl der Vergleich nicht zu einer Übereinstimmung führen.

3. Verfahren nach Anspruch 1 oder 2, wobei die Erzeugungs- und Vergleichsschritte werden ausgeführt, wenn ein Prüfpunkt erreicht.

4. Verfahren nach Anspruch 3, wobei ein Prüfpunkt bei einer der auftritt: wenn eine vorbestimmte Anzahl von Instruktionen ausgeführt werden, oder an einem vorbestimmten Befehlsadresse.

5. Verfahren nach einem der vorhergehenden Ansprüche und mit den Schritten des Vergleichens der erzeugten Signatur repräsentativ für eine physikalische Befehlsadressen-Sequenz für einen Teil der Codefolge ausgeführt, um die Signatur des gespeicherten Modells Signatur repräsentativ für eine physikalische Befehlsadressen-Sequenz ein Teil der Codesequenz als die vorher berechnete Signatur repräsentativ für eine physikalische Befehlsadressen-Sequenz für einen Teil der Codesequenz und Vergleichen der Signatur repräsentativ für einen Ausführungszustand von der Ausführung der Befehle in dem Teil des Codes ergeben ausgeführt Sequenz, die zu dem gespeicherten Modells Unterschrift Vertreter eines Ausführungszustand von der Ausführung der Anweisungen in dem Abschnitt, der Codesequenz resultierenden ausgeführt wie die ausgeführten eine vorberechnete Signatur repräsentativ für einen Ausführungszustand von der Ausführung der Befehle in die resultierende Teil der Codesequenz.

6. System (100), umfassend:
einen Prozessor (104) mit einem Trace-Port (240), dem Trace-Port, die Daten in Bezug auf einen Ausführungszustand einer zuletzt ausgeführten Befehls;
einen Speicher (118) mit dem Prozessor (104) gekoppelt ist; und
**gekennzeichnet durch**
ein Software-Integritätsprüfung, SIC, Logik (200) mit dem Speicher (118) gekoppelt und mit dem Trace-Port (240);
wobei der SIC-Logik (200) betreibbar ist, um:
Erzeugung einer Signatur repräsentativ für eine physikalische Befehlsadressen-Sequenz für einen Teil der Codefolge ausgeführt wird;
Vergleichen der Signatur zu einer im voraus berechneten Signatur repräsentativ für eine physikalische Befehlsadressen-Sequenz für einen Teil der Codefolge;
Erzeugung einer Signatur repräsentativ für einen Ausführungszustand von der Ausführung der Befehle in dem Abschnitt der Codefolge ausgeführt resultieren;
Vergleichen der Signatur repräsentativ für einen Ausführungszustand von der Ausführung der Befehle in dem Abschnitt der Codefolge resultierende an einen vorberechneten Signatur repräsentativ für einen Ausführungszustand von der Ausführung der Befehle in dem Abschnitt der Codefolge resultierende ausgeführt wird; und
Speichern in dem sicheren Speicher (118) der erzeugten Signatur repräsentativ für eine physikalische Befehlsadressen-Sequenz für einen Teil der Codefolge ausgeführt und die erzeugte Signatur repräsentativ für einen Ausführungszustand von der Ausführung der Befehle in dem Abschnitt der Codefolge ergeb in einem Aufzeichnungsmodus als Modell Signatur repräsentativ für eine physikalische Befehlsadressen-Sequenz für einen Teil der Codefolge ausgeführt und Modell Signatur repräsentativ für einen Ausführungszustand von der Ausführung der Befehle in dem Teil der Codesequenz resultierende ausgeführt bzw. ausgeführt.

7. System nach Anspruch 6, bei der die Integrität der Adressen zu prüfen, die SIC-Logik (200), initiiert die Erzeugung und Vergleichsschritte, wenn ein Checkpoint erreicht wurde.

8. System nach Anspruch 6, wobei, um zu bestimmen, dass ein Checkpoint erreicht wurde, ist die SIC-Logik (200) ferner betreibbar ist, um zu bestimmen, dass ein Checkpoint in einem der erreicht:
einer vordefinierten Befehlsadresse, oder wenn eine vorbestimmte Anzahl von Anweisungen ausgeführt.

9. System nach Anspruch 6, bei der die Integrität der Ausführungszustände zu überprüfen, die SIC-Logik (200) umfasst ferner eine Logik (208) zur Ausführung einer Reaktion, die eine Sicherheitsverletzung, wenn sowohl der Vergleich nicht zu einer Übereinstimmung führen.

10. System nach einem der vorhergehenden Ansprüche, wobei der SIC Logik ferner dafür ausgelegt ist:
Vergleichen der erzeugten Signatur repräsentativ für eine physikalische Befehlsadressen-Sequenz für einen Teil der Codefolge ausgeführt, um die Signatur des gespeicherten Modells Signatur repräsentativ für eine physikalische Befehlsadressen-Sequenz für einen Teil der Codefolge, die als die ausgeführt vorberechnete Signatur repräsentativen einer physikalischen Befehlsadressen-Sequenz für einen Teil der Codefolge; und
die Unterschrift Vertreter eines Ausführungszustand von der Ausführung der Anweisungen in dem Abschnitt, der Codesequenz resultierenden ausgeführt, um die gespeicherten Modells Signatur repräsentativ für einen Ausführungszustand von der Ausführung der Anweisungen in dem Abschnitt, der Codesequenz resultierenden ausgeführt wie gesagt eine vorberechnete Signatur repräsentativ für einen Ausführungszustand von der Ausführung der Befehle in dem Abschnitt der Codefolge resultieren.

## Revendications

1. Procédé pour l'exécution d'une séquence de code comprenant:
en commençant l'exécution d'instructions comprenant la séquence de code; et **caractérisé en ce que**
tandis que les instructions se exécutent;
la génération d'une signature représentative d'une séquence d'adresse physique d'instruction pour une partie de la séquence de code en cours d'exécution;
comparer la signature à une signature représentative précalculée d'une séquence physique de l'adresse d'instruction pour une partie de la séquence de code;
la génération d'une signature représentative de l'état d'exécution résultant de l'exécution des instructions de la portion de la séquence de code en cours d'exécution;
la comparaison de la signature représentative d'un état d'exécution résultant de l'exécution des instructions de la portion de la séquence de code étant exécutée à un représentant de signature pré-calculée de l'état d'exécution résultant de l'exécution des instructions de la portion de la séquence de code; et
enregistrement, dans une mémoire sécurisée du représentant de la signature générée d'une séquence physique d'adresse d'instruction pour une partie de la séquence de code en cours d'exécution et du représentant de la signature générée d'un état d'exécution résultant de l'exécution des instructions de la portion de la séquence de code en cours d'exécution dans un mode d'enregistrement en tant que représentant de la signature de modèle d'une séquence d'adresses d'instructions physique pour une partie de la séquence de code en cours d'exécution et d'un représentant de la signature de modèle d'état d'exécution résultant de l'exécution des instructions dans la partie de la séquence de code en cours d'exécution respectivement.

2. Procédé selon la revendication 1, comprenant en outre l'exécution d'une réponse indiquant une violation de sécurité si les deux desdites comparaisons ne aboutissent pas à une correspondance.

3. Procédé selon la revendication 1 ou 2, dans lequel le générateur et les étapes de comparaison sont exécutées lorsqu'un point de contrôle est atteinte.

4. Procédé selon la revendication 3, dans lequel un point de contrôle se produit à une de:
lorsqu'un nombre prédéterminé d'instructions est exécutée, ou à une adresse d'instruction prédéfini.

5. Procédé selon l'une quelconque des revendications précédentes et comprenant les étapes consistant à comparer la signature représentative généré d'une séquence d'adresses d'instructions physique pour une partie de la séquence de code en cours d'exécution de la signature de ladite modèle signature représentatif d'une séquence d'adresses d'instructions physique pour sauvegardé une partie de la séquence de code en cours d'exécution en tant que ledit membre de signature précalculée d'une séquence physique d'adresse d'instruction pour une partie de la séquence de code et la comparaison de la signature représentative d'un état d'exécution résultant de l'exécution des instructions dans la partie du code séquence en cours d'exécution à ladite signature modèle enregistré représentant d'un état d'exécution résultant de l'exécution des instructions dans la partie de la séquence de code en cours d'exécution comme dit un représentant de signature pré-calculé d'un état d'exécution résultant de l'exécution des instructions du partie de la séquence de code.

6. Système (100) comprenant:
un processeur (104) ayant un port de trace (240), le port de trace fournit des données concernant l'état d'une instruction exécuté le plus récemment d'exécution;
une mémoire (118) couplé au processeur (104); et
**caractérisé par**
une vérification de l'intégrité du logiciel, SIC, de la logique (200) couplé à la mémoire (118) et au port de trace (240);
dans lequel la logique CTI (200) peut fonctionner pour:
générer une signature représentative d'une séquence d'adresse physique d'instruction pour une partie de la séquence de code en cours d'exécution;
comparer la signature à une signature représentative de pré-calculé d'une séquence physique d'adresse d'instruction pour une partie de la séquence de code;
générer une signature représentative de l'état d'exécution résultant de l'exécution des instructions de la portion de la séquence de code en cours d'exécution;
comparer la signature représentative d'un état d'exécution résultant de l'exécution des instructions de la portion de la séquence de code étant exécutée à un représentant de signature pré-calculée de l'état d'exécution résultant de l'exécution des instructions de la portion de la séquence de code; et
enregistrer dans la mémoire sécurisée (118) représentant de la signature générée d'une séquence d'adresses d'instructions physique pour une partie de la séquence de code en cours d'exécution et du représentant de la signature générée d'un état d'exécution résultant de l'exécution des instructions dans la partie de la séquence de code en cours d'exécution dans un mode d'enregistrement en tant que représentant de la signature de modèle d'une séquence d'adresses d'instructions physique pour une partie de la séquence de code en cours d'exécution et d'un représentant de la signature de modèle d'état d'exécution résultant de l'exécution des instructions dans la partie de la séquence de code étant respectivement exécuté.

7. Le système de la revendication 6, dans lequel, pour vérifier l'intégrité des adresses, la logique SIC (200) initie la générer et comparer des mesures quand un point a été atteint.

8. Système selon la revendication 6, dans lequel, pour déterminer qu'un point de contrôle a été atteint, la logique CTI (200) est en outre utilisable pour déterminer un point de contrôle qui a été atteinte à l'un parmi: une adresse d'instruction prédéfini, ou lorsqu'un nombre prédéterminé de les instructions sont exécutées.

9. Le système de la revendication 6, dans lequel, pour vérifier l'intégrité des états d'exécution, la logique SIC (200) comprend en outre une logique (208) pour exécuter une réponse indiquant une violation de sécurité si les deux desdites comparaisons ne aboutissent pas à un match.

10. Système selon l'une quelconque des revendications précédentes, dans lequel la logique CTI est en outre adapté pour:
comparer la signature représentative généré d'une séquence d'adresses d'instructions physique pour une partie de la séquence de code en cours d'exécution de la signature de ladite modèle signature représentatif d'une séquence d'adresses d'instructions physique est enregistrée sur une partie de la séquence de code étant exécuté en tant que ledit pré-calculée représentant la signature d'une séquence d'adresse physique d'instruction pour une partie de la séquence de code; et
comparer le représentant de la signature d'un état d'exécution résultant de l'exécution des instructions dans la partie de la séquence de code en cours d'exécution pour ledit modèle signature représentant d'un état d'exécution résultant de l'exécution des instructions de la partie de la séquence de code enregistré en cours d'exécution comme l'a dit un représentant de signature pré-calculé d'un état d'exécution résultant de l'exécution des instructions de la partie de la séquence de code.
